# EUROPÄISCHE PATENTSCHRIFT

(11) **EP 1 892 122 B1**
(45) Veröffentlichungstag und Bekanntmachung des Hinweises auf die Patenterteilung: **05.08.2009**
(21) Anmeldenummer: 07114603.9
(22) Anmeldetag: 20.08.2007
(51) Int. Cl.: B60B 17/00

(54) **Schallabsorber-Element und Schallabsorber für ein Schienenfahrzeug-Rad sowie damit ausgestattetes Rad**
Sound absorbing element and sound absorber for a rail vehicle wheel and wheel equipped with the same
Elément d'absorbeur de bruit et absorbeur de bruit pour une roue de véhicule sur rail et roue ainsi pourvue

(30) Priorität: 22.08.2006 DE 202006012852 U
(43) Veröffentlichungstag der Anmeldung: 27.02.2008
(73) Patentinhaber: Gutehoffnungshütte Radsatz GmbH, 46145 Oberhausen (DE)
(72) Erfinder: Gerlach, Thomas, 47506 Neukirchen-Vluyn (DE); Notthoff, Norbert, 46286 Dorsten (DE)
(74) Vertreter: Patentanwälte Dr. Solf & Zapf

(56) Entgegenhaltungen:
- EP-B1- 0 065 157
- DE-A1- 2 652 874
- DE-A1- 10 161 006
- DE-C1- 19 509 389

## Beschreibung

Die vorliegende Erfindung betrifft ein Schallabsorber-Element zur Körperschalldämpfung bei einem Schienenfahrzeug-Rad, bestehend aus einem flachen Schichtkörper aus mindestens zwei parallelen Absorberplatten mit dazwischen liegender Dämpfungsschicht, wobei der Schichtkörper mit einer randlichen, kreisbogenförmigen Basis derart mit einem Laufkranz des Rades verbindbar ist, dass er in einer quer, insbesondere etwa rechtwinklig zu einer Radachse angeordneten Radebene liegt.

Weiterhin betrifft die Erfindung auch einen aus einem oder mehreren (mindestens zwei) solcher Absorber-Elemente bestehenden Schallabsorber sowie auch ein Schienenfahrzeug-Rad mit einem solchen Schallabsorber.

Die DE 31 19 497 C2 bzw. die korrespondierende EP 0 065 157 B1 beschreibt einen Körperschalldämpfer für ein Laufrad, der aus einer Mehrzahl von einzelnen, gleichartigen Schallabsorber-Elementen (dort "Wellenleiter" bzw. "Hornteile" genannt) besteht.

In der DE 195 09 38 9 C1 ist eine Ausführung beschrieben, bei der mindestens zwei insbesondere durch ihre Flächenform verschiedene Typen von Absorber-Elementen (Wellenleitern) in einer bestimmten Umfangsverteilung vorgesehen sind.

Schließlich beschreibt die DE 84 24 104 U1 eine Ausführung, bei der jedes Absorber-Element (jeder Wellenleiter) an der Basis parallel zu Achsrichtung des Laufrades nach außen abgewinkelt und mit dem Radkranz kraftschlüssig verbunden ist.

In vielen Anwendungsfällen werden heute geschlitzte Schallabsorber-Elemente eingesetzt, wobei die parallelen Absorberplatten über kongruente Schlitze in zungenartige Abschnitte unterteilt sind (beispielsweise EP 0 065 157 B1, Figur 1 b).

Der vorliegenden Erfindung liegt die Aufgabe zugrunde, ein Schallabsorber-Element zu schaffen, das einerseits für eine optimale Schalldämpfung ausgelegt werden kann, andererseits aber auch eine gute mechanische Haltbarkeit aufweist.

Erfindungsgemäß wird dies dadurch erreicht, dass jeder Schlitz zumindest in seinem in der Plattenfläche - und dort in einer Hinterbohrung endenden Schlitz-Endbereich von einem schlitzfreien Bereich der jeweils benachbarten Absorberplatte überdeckt ist. Dies bedeutet, dass innerhalb des Schichtkörpers jeder vorhandene Schlitz einer Absorberplatte zumindest auf einer Seite von einem schlitzfreien Bereich der dort (über die Dämpfungsschicht) benachbarten Absorberplatte überdeckt wird. Dadurch wird eine mechanische Stabilisierung im Schlitzbereich erreicht. Dabei können durch eine bestimmte, nahezu beliebig mögliche Anordnung und Verlaufsform von Schlitzen die Schalldämpfungseigenschaften optimiert werden.

Der Schichtkörper besteht aus mindestens zwei benachbarten geschlitzten Absorberplatten , deren Schlitze dann aber gegeneinander in der Plattenebene so versetzt angeordnet sind, dass jedenfalls die erfindungsgemäße "Schlitzüberdeckung" im Bereich jedes der vorhandenen Schlitze vorgesehen ist. Bei einer Ausführung mit mindestens drei Absorberplatten können je zwei beidseitig einer ersten, geschlitzten oder ungeschlitzten Plattenart benachbarte, ungeschlitzte oder geschlitzte Platten identisch oder ebenfalls unterschiedlich ausgebildet sein.

Weitere vorteilhafte Ausgestaltungsmerkmale der Erfindung sind in den abhängigen Ansprüchen enthalten.

Anhand von in der Zeichnung veranschaulichten, bevorzugten Ausführungs- und Anwendungsbeispielen soll die Erfindung genauer erläutert werden. Dabei zeigen:
- Fig.1: eine axiale Draufsicht eines Schienenfahrzeug-Rades mit erfindungsgemäßen Schallabsorber-Elementen
- Fig. 2: einen vergrößerten Halb-Axialschnitt zu Fig. 1,
- Fig. 3 und 4: ein zweites Ausführungsbeispiel in Darstellungen analog zu Fig. 1 und 2,
- Fig. 5 und 6, 7 und 8, 9 und 10 sowie 11 und 12: vier weitere Ausführungsformen jeweils analog zu Fig. 1 und 2,
- Fig. 13: eine vergrößerte Draufsicht einer einzelnen Absorberplatte mit einem gegenüber Fig. 1 modifizierten Schlitzverlauf,
- Fig. 14: eine vergrößerte Ansicht einer ersten Ausführung des Absorber-Elementes entsprechend Fig. 1,
- Fig. 15: einen Querschnitt in der Ebene A-A gemäß Fig. 14,
- Fig. 16: eine Ansicht analog zu Fig. 14 einer erfindungsgemäßen Ausführung des Absorber-Elementes entsprechend Fig. 1,
- Fig. 17: einen Querschnitt in der Ebene A-A gemäß Fig. 16,
- Fig. 18: ein weiteres alternatives Ausführungsbeispiels eines Absorber-Elementes in einer Ansicht analog zu Fig. 14 bzw. 16 und
- Fig. 19: einen Querschnitt in der Ebene A-A gemäß Fig. 18.

In den verschiedenen Figuren der Zeichnungen sind gleiche bzw. sich funktionell entsprechende Teile und Komponenten stets mit den gleichen Bezugszeichen versehen. Deshalb gilt jede Beschreibung eines Teils unter Bezugnahme auf eine bestimmte Zeichnungsfigur analog auch zu den anderen Zeichnungsfiguren, in denen das Teil mit dem entsprechenden Bezugszeichen ebenfalls zu erkennen ist.

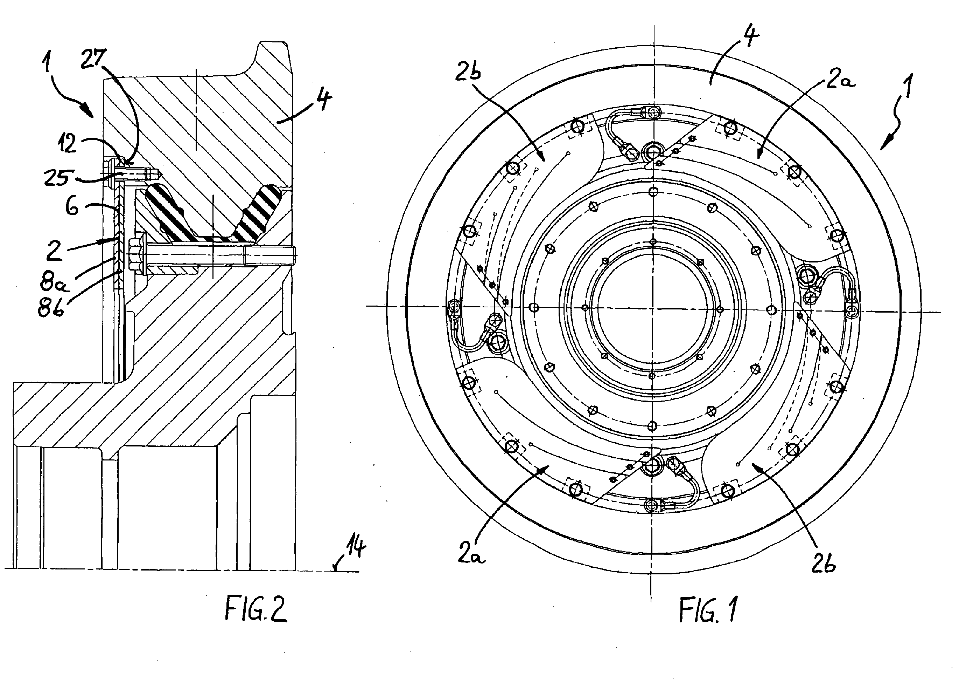

Wie sich zunächst aus den Fig. 1 bis 12 ergibt, ist ein Schienenfahrzeug-Rad 1 mit einem Körperschallabsorber ausgestattet, der aus mehreren Schallabsorber-Elementen 2 besteht, die jeweils an einem äußeren Laufkranz 4 des Rades 1 befestigt werden. Dabei sind zahlreiche verschiedene Ausgestaltungen der Schallabsorber-Elemente 2 denkbar, was in den Zeichnungen durch zusätzliche Buchstaben (2a bis 2p) unterschieden wird.

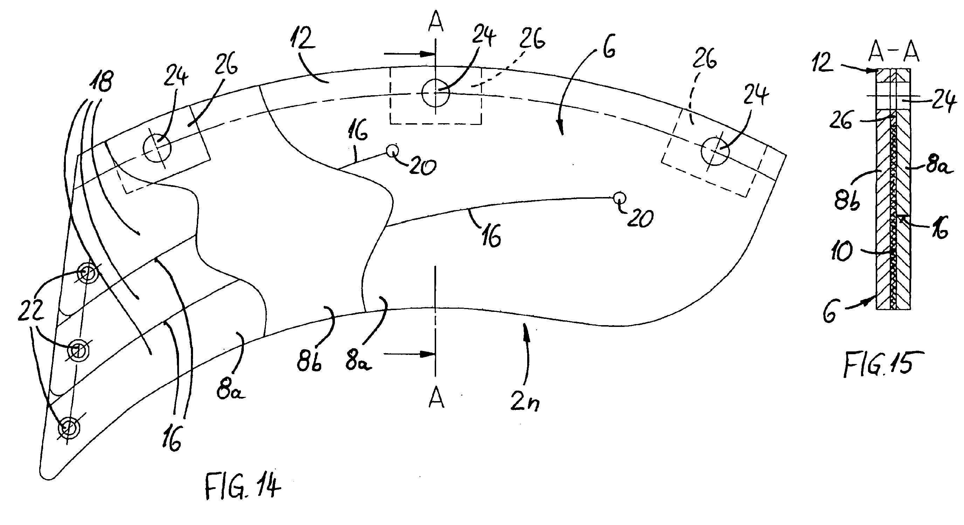

Wie sich beispielhaft aus Fig. 14 bis 19 ergibt, besteht jedes Schallabsorber-Element 2 in allen Ausführungen aus einem flachen, sandwichartigen Schichtkörper 6 aus mindestens zwei parallelen Absorberplatten 8a, 8b mit dazwischenliegender Dämpfungsschicht 10. Dabei ist der Schichtkörper 6 mit einer randlichen, kreisbogenförmigen Basis 12 an dem Laufkranz 4 des Rades 1 derart befestigbar, dass er etwa in einer rechtwinklig zu einer Radachse 14 angeordneten Radebene liegt (siehe hierzu insbesondere die Schnitte in den Fig. 2, 4, 6, 8, 10 und 12). Die Elemente 2 des Schallabsorbers können auch gemeinsam eine leicht konische Hüllfläche definieren.

Wie sich nun weiterhin insbesondere aus Fig. 14 bis 19 ergibt, ist mindestens eine der Absorberplatten 8 durch mindestens einen Schlitz 16 in zungenartige Abschnitte 18 unterteilt, wobei der/jeder randoffene, d. h. von einem Plattenrand ausgehende Schlitz 16 zumindest in seinem in der Plattenfläche- insbesondere in einer Hinterbohrung 20 - endenden Schlitz-Endbereich von einem schlitzfreien Bereich der jeweils benachbarten Absorberplatte 8 in einer zur Plattenfläche senkrechten Richtung überdeckt ist.

Hierbei sind grundsätzlich zwei Hauptausführungen möglich. Gemäß Fig. 14 und 15 weist nur eine von zwei benachbarten Absorberplatten - und zwar die Absorberplatte 8a, Schlitze 16 auf, während die andere, benachbarte Absorberplatte 8b gänzlich ungeschlitzt ist. Dies wird einerseits in Fig. 14 durch einen ausgesparten Bereich der oberen Absorberplatte 8a (und der Dämpfungsschicht 10) deutlich, wodurch die untere Absorberplatte 8b erkennbar ist, die keine Schlitze aufweist.

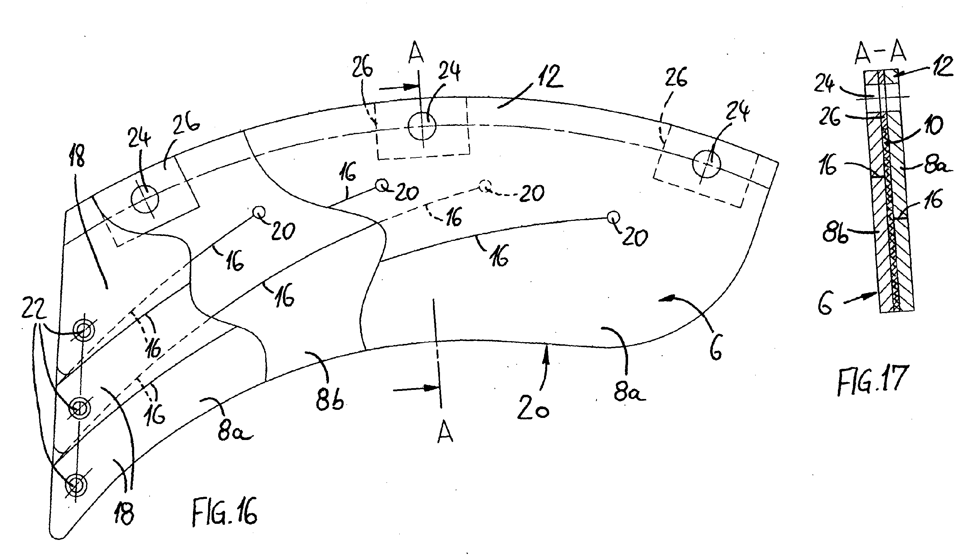

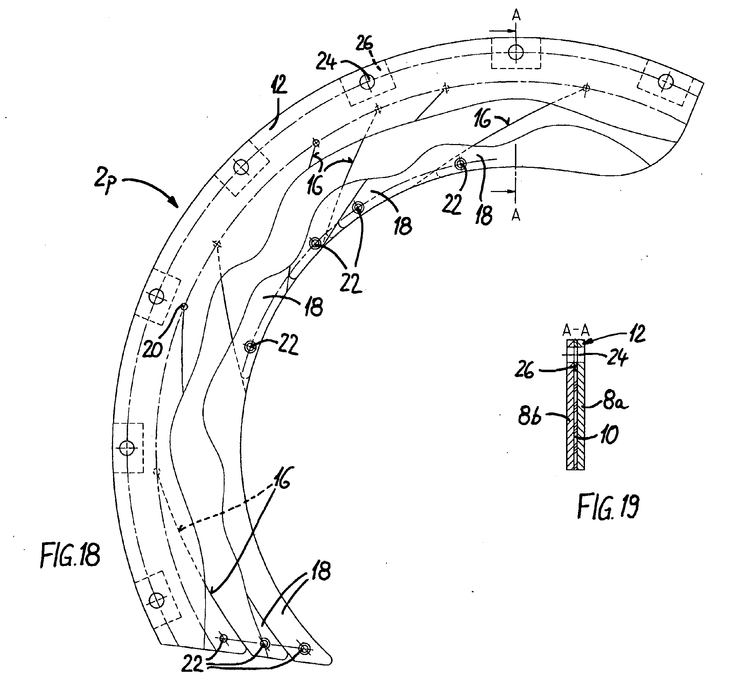

Bei der Alternative gemäß Fig. 16 und 17 sowie auch gemäß Fig. 18 und 19 weisen erfindungsgemäß beide von zwei benachbarten Absorberplatten 8 Schlitze 16 auf, die allerdings gegeneinander in der Plattenebene versetzt liegen.

Hierdurch ist in jedem Fall jeder Schlitz 16 einer Absorberplatte 8 zumindest abschnittsweise von einem schlitzfreien Bereich mindestens einer benachbaren Absorberplatte 8 überdeckt.

Die Absorberplatten 8 bestehen insbesondere aus Metall (Metallplatten), und zwar einem Eisen-Metall (z. B. Edelstahl) oder NE-Metall. Dabei sind die Absorberplatten 8 über die jeweilige Dämpfungsschicht 10 vorzugsweise stoffschlüssig und/oder über geeignete Verbindungsmittel, wie Vernietungen 22 oder Verschraubungen, zumindest im freien Endbereich der zungenartigen Abschnitte 18 verbunden. Die bzw. jede Dämpfungsschicht 10 kann bevorzugt von einer beidseitig selbstklebenden Folie aus einem viskoelastischen Material gebildet sein. Dabei handelt es sich um eine Elastomerschicht mit einer Dicke, die je nach Ausführung und Anwendung im Bereich zwischen 1/10 Millimeter bis mehrere Millimeter variieren kann. Als weitere geeignete Dämpfungsmaterialien können auch Gummi, Silikon, sonstige Kunststoffe, Metallschaum und/oder Metallgewebe - gegebenenfalls auch in beliebiger Kombination (Compositschichten) - verwendet werden.

In weiterer bevorzugter Ausgestaltung sind die Absorberplatten 8 im Bereich von Haltelöchern 24 der Basis 12 über direkt dazwischenliegende formstabile Distanzelemente 26 verbunden. Die Distanzelemente 26 liegen somit in diesen Bereichen anstelle der Dämpfungsschicht 10 mit einer an die Dicke der Dämpfungsschicht 10 angepassten Dicke zwischen den Absorberplatten 8 (siehe insbesondere die Schnittansichten in Fig. 15, 17 und 19). Durch diese Ausgestaltung werden Setz- bzw. Fließerscheinungen der Dämpfungsschicht 10 durch die Presskraft im Befestigungsbereich vermieden. Als Distanzelemente 26 können bevorzugt Metallfolienstücke oder Metallplatten eingesetzt werden. Anstelle der beispielhaft rechteckig gezeichneten einzelnen Distanzelemente 26 können auch z.B. kreisförmige Elemente oder größere, mehrere Haltelöcher 24 überdeckende, z.B. kreisbogenförmige Elemente vorgesehen sein.

Im Folgenden sollen noch Besonderheiten der unterschiedlichen, in den Fig. 1 bis 12 veranschaulichten Anwendungsbeispiele erläutert werden.

Bei der Ausführung nach Fig. 1 und 2 handelt es sich bei dem Rad 1 um ein gummigefedertes Rad, wobei der Laufkranz 4 als sogenannter Radreifen gummigelagert ist. Bei dieser Ausführung sind beispielhaft vier Schallabsorber-Elemente 2 in zwei unterschiedlichen Ausführungen vorgesehen. Die erste Ausführung der Elemente 2a entspricht weitgehend der Ausführung gemäß Fig. 14 und 15, während die Elemente 2b etwa der Ausführung gemäß Fig. 16 und 17 entsprechen. Zudem ist bei dieser Ausführung eine achsparallele Befestigung der Elemente 2 am Laufkranz 4 vorgesehen, wobei jeweils die Basis 12 als in der Plattenebene liegender Randstreifen mit den Haltelöchern 24 ausgebildet ist. Dabei werden zur Befestigung achsparallele Schrauben 25 verwendet, wobei die Basis 12 gegen eine Koppelfläche 27 des Rades 1 gepresst wird.

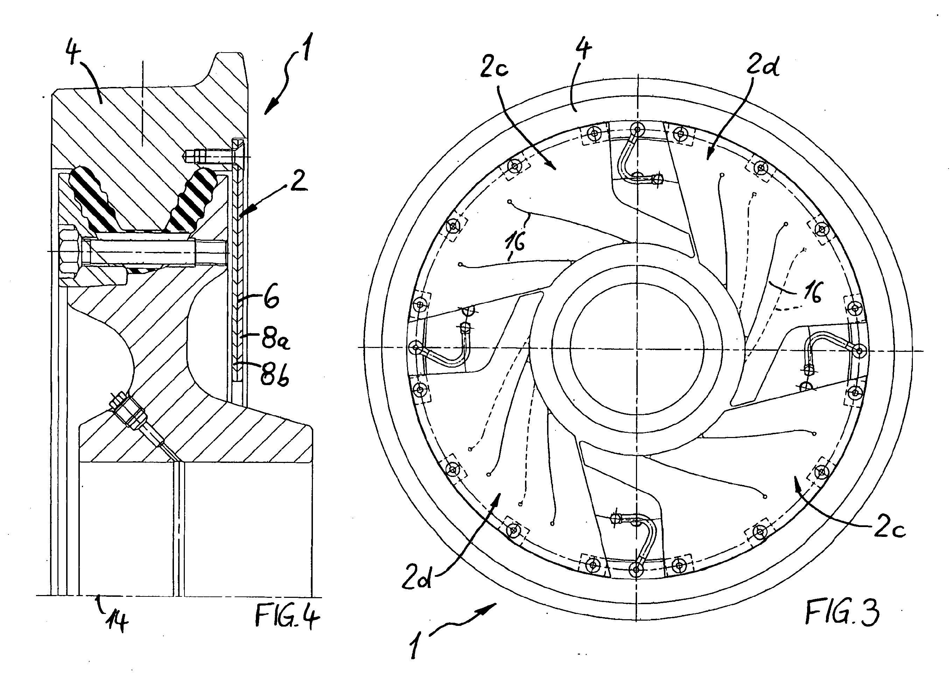

Bei der Ausführung gemäß Fig. 3 und 4 sind die Schallabsorber-Elemente 2 auf der anderen Radseite angeordnet und weisen eine gegenüber Fig. 1 und 2 unterschiedliche Flächenform auf. Auch hierbei sind insgesamt vier Elemente 2 in zwei verschiedene Ausführungen 2c, 2d vorgesehen. Die Schlitze 16 weisen in ihren Endbereichen einen bogenförmigen Verlauf zu Erhöhung der mechanischen Belastbarkeit und der Wirksamkeit der Dämpfung auf.

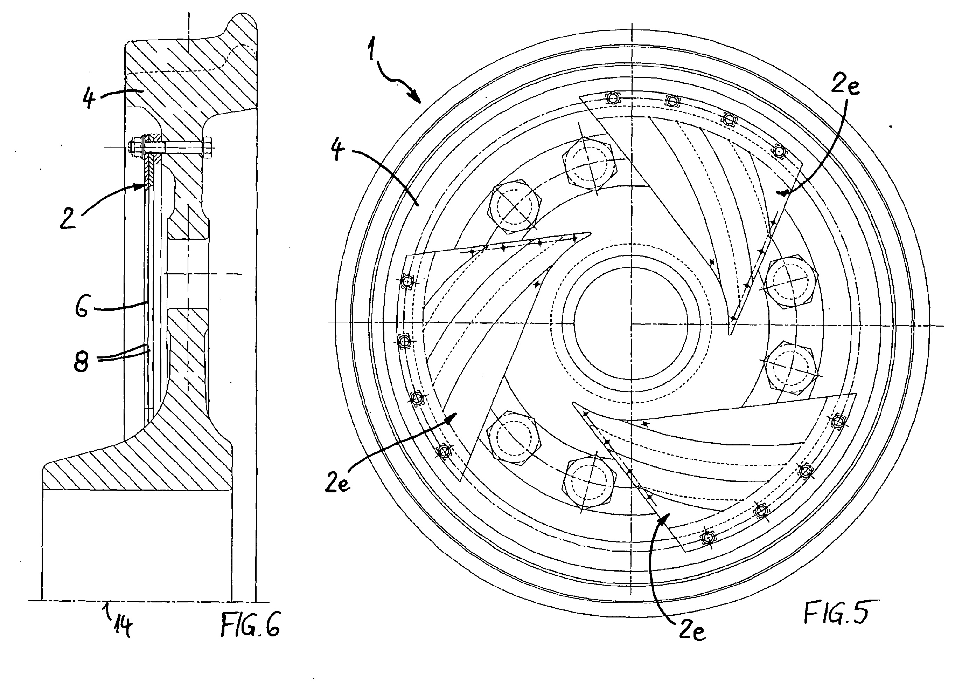

In den Fig. 5 und 6 ist eine Ausführung des Rades 1 als sogenanntes Vollrad dargestellt. Hier ist wiederum eine bzgl. der Flächenform und auch der Befestigung der Elemente 2 unterschiedliche Ausführung veranschaulicht.

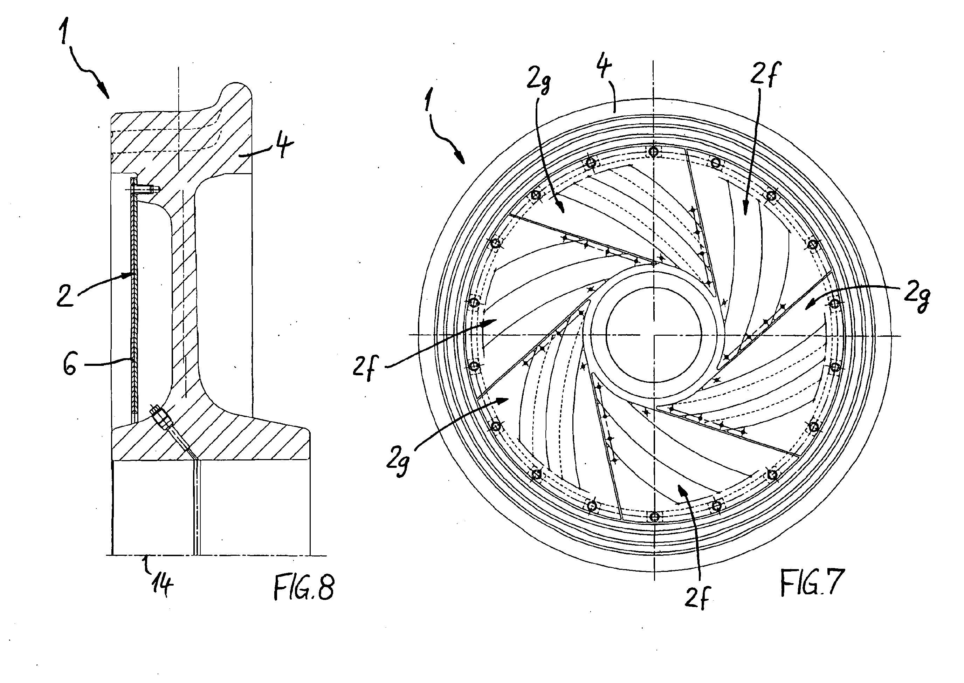

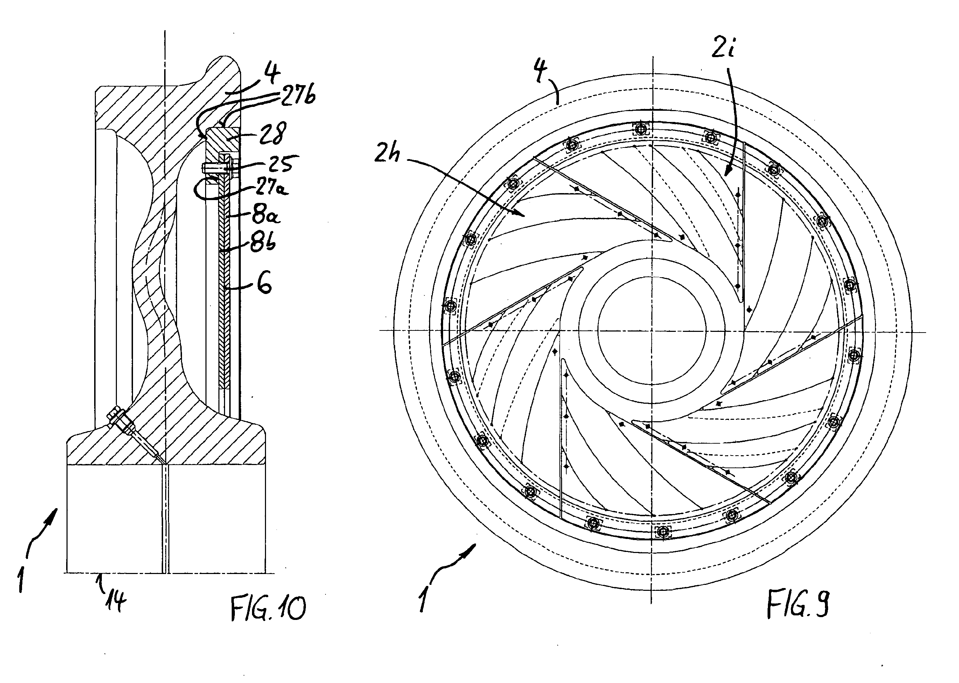

Die weiteren Figuren 7 bis 10 zeigen dazu weitere Varianten. Gemäß Fig. 9 und 10 ist zur Befestigung der Elemente 2 am Laufkranz 4 ein zusätzlicher Haltering 28 vorgesehen. Der Haltering 28 ist kraftschlüssig mit dem Rad 1 verbunden. Die Basis 12 jedes Schichtkörpers 6 liegt an einer Koppelfläche 27a des Halterings 28, und der Haltering 28 liegt an Koppelflächen 27b des Rades 1 an.

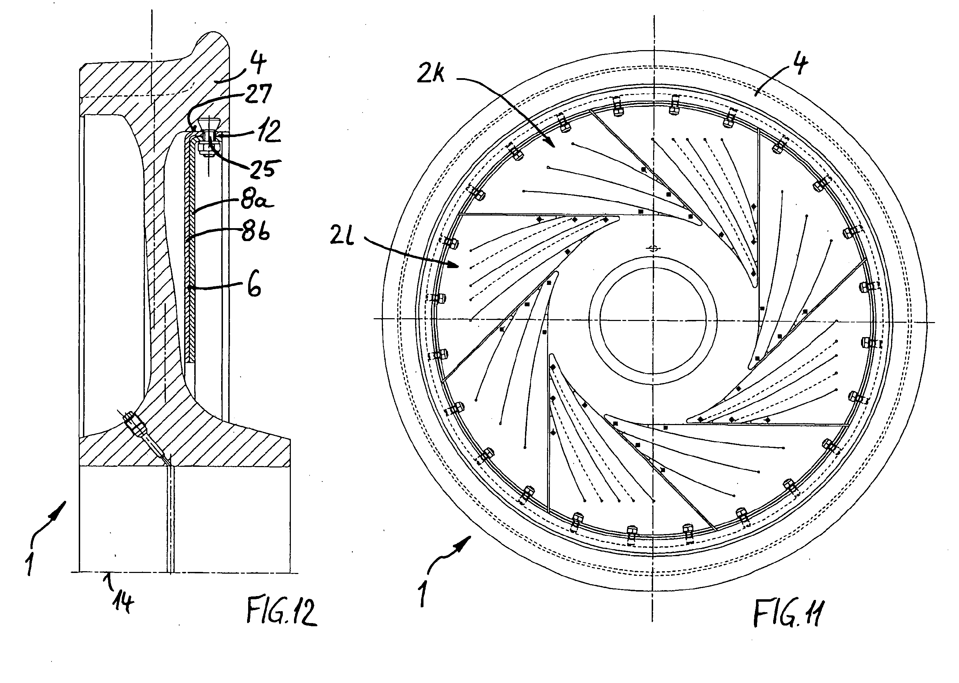

Bei der Ausführung gemäß Fig. 11 und 12 ist eine radiale Befestigung der Elemente 2 über jeweils eine umgewinkelte, achsparallele Basis 12 und über radiale Schrauben 25 vorgesehen. Diese Ausführung entspricht im Wesentlichen dem eingangs schon erwähnten Dokument DE 84 24 104 U1.

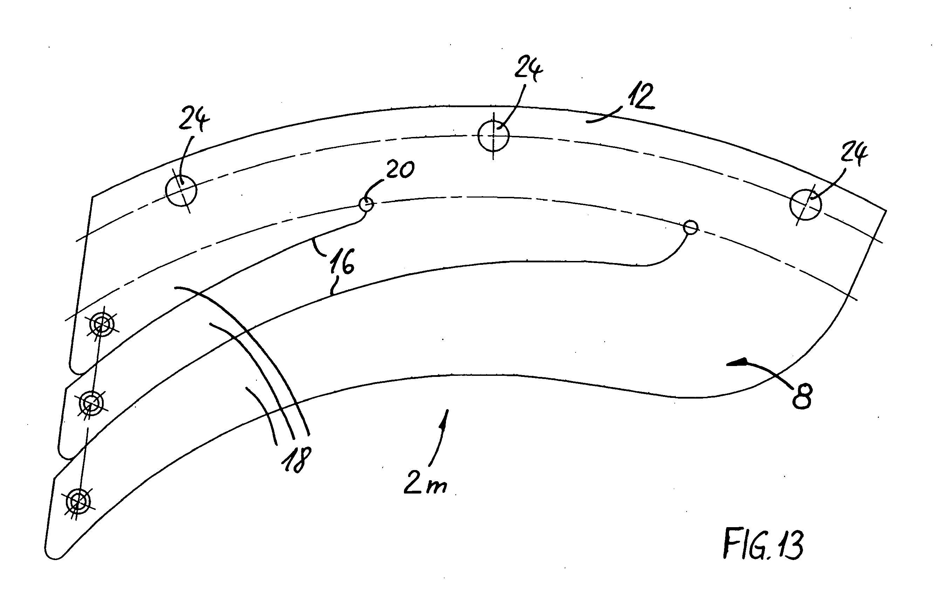

Die in Fig. 13 dargestellte Ausführung der Absorberplatte 8 entspricht bzgl. der endseitigen Verlaufsform der Schlitze 16 etwa den Schlitzen 16 gemäß Fig. 3.

Die in Fig. 18 und 19 dargestellte Ausführung des Schallabsorber-Elementes 2p weist eine derart große Umfangserstreckung auf, dass pro Rad 1 nur zwei dieser Elemente 2p ausreichen. Alternativ kann die Umfangserstreckung auch so groß sein, dass nur ein Element ausreicht.

Die Erfindung eignet sich für angetriebene Räder, nicht angetriebene Räder und/oder für freilaufende oder angetriebene Losräder, und zwar jeweils in einer Ausbildung als Vollrad, bereiftes Rad oder gummigefedertes Rad.

Die Flächenformen der Schallabsorber-Elemente können variieren, um eine optimale, auf das jeweilige Rad 1 abgestimmte Körperschalldämpfung zu erreichen.

## Patentansprüche

1. Schallabsorber-Element (2) zur Körperschalldämpfung bei einem Schienenfahrzeug-Rad (1), bestehend aus einem flachen Schichtkörper (6) aus mindestens zwei parallelen Absorberplatten (8a, 8b) mit dazwischen liegender Dämpfungsschicht (10), wobei der Schichtkörper (6) mit einer randlichen Basis (12) an einem Laufkranz (4) des Rades (1) derart befestigbar ist, dass er in einer quer zu einer Radachse (14) angeordneten Radebene liegt, und wobei jede von mindestens zwei benachbarten Absorberplatten (8) durch mindestens einen randoffenen, von einem Plattenrand ausgehenden und in der Plattenfläche endenden Schlitz (16) in zungenartige Abschnitte (18) unterteilt ist,
**dadurch gekennzeichnet, dass** jederSchlitz(16)zumindestin seinem in der Plattenfläche und dort in einer Hinterbohrung (20) endenden Schlitz-Endbereich von einem schlitzfreien Bereich der jeweils benachbarten Absorberplatte (8) überdeckt ist.

2. Schallabsorber-Element nach Anspruch 1,
**dadurch gekennzeichnet, dass** die Schlitze (16) der benachbarten Absorberplatten (8) zumindest abschnittsweise gegeneinander in der Plattenebene versetzt liegen.

3. Schallabsorber-Element nach Anspruch 1 oder 2,
**dadurch gekennzeichnet dass** eine weitere benachbarte Platte (8) gänzlich ungeschlitzt ist.

4. Schallabsorber-Element nach einem der Ansprüche 1 bis 3,
**dadurch gekennzeichnet, dass** die insbesondere aus Metall bestehenden Absorberplatten (8) über die jeweilige Dämpfungsschicht (10) stoffschlüssig und/oder über Vernietungen (22) und/oder dergleichen Verbindungsmittel verbunden sind.

5. Schallabsorber-Element nach einem der Ansprüche 1 bis 4,
**dadurch gekennzeichnet, dass** die/jede Dämpfungsschicht (10) von einer beidseitig selbstklebenden Folie aus einem viskoselastischen Material gebildet ist.

6. Schallabsorber-Element nach einem der Ansprüche 1 bis 4,
**dadurch gekennzeichnet, dass** die/jede Dämpfungsschicht (10) aus mindestens einer Lage eines Dämpfungsmaterials, wie Gummi, Silikon, Kunststoff, Metallschaum und/oder Metallgewebe, besteht.

7. Schallabsorber-Element nach einem der Ansprüche 1 bis 6,
**dadurch gekennzeichnet, dass** die Absorberplatten (8) im Bereich der Basis (12) über direkt dazwischen liegende formstabile Distanzelemente (26) verbunden sind.

8. Körperschallabsorber für ein Schienenfahrzeug-Rad (1), bestehend aus mindestens einem Schallabsorber-Element (2) nach einem der vorhergehenden Ansprüche, wobei das/jedes Schallabsorber-Element (2) mit seiner Basis (12), insbesondere in einer gleichmäßigen, radialsymmetrischen Umfangsverteilung, an einem Laufkranz (4) des Rades (1) befestigbar ist.

9. Schienenfahrzeug-Rad (1) mit einem Körperschallabsorber nach Anspruch 8, wobei an einem Laufkranz (4), mindestens ein Schallabsorber-Element (2), insbesondere mindestens zwei Schallabsorber-Elemente (2) mit gleicher oder unterschiedlicher Ausgestaltung, befestigt ist/sind.

10. Rad nach Anspruch 9 in einer Ausbildung als Vollrad oder bereiftes Rad.

11. Rad nach Anspruch 9 in einer Ausbildung als gummigefedertes Rad.

## Claims

1. A sound-absorber element (2) for structure-borne sound deadening in the case of a rail-vehicle wheel (1), consisting of a plane stratified body (6) of at least two parallel absorber plates (8a, 8b) with a deadening layer (10) therebetween, wherein the stratified body (6) can be secured to a tread (4) of a wheel (1) by means of a peripheral base in such a manner that it lies in a wheel plane arranged transversely to a wheel axis (14), and wherein each of at least two adjacent absorber plates (8) is divided into tongue-like portions by at least one slit (16) which has an open edge, issues from a plate edge and ends in the plate surface, **characterised in that** each slit (16) is covered by a slit-free region of the absorber plate (8) currently adjacent, at least in its slit end-region ending in the plate surface and there in a back-drilled bore (20).

2. A sound-absorber element according to claim 1, **characterised in that** at least portions of the slits (16) of the adjacent absorber plates (8) are offset in relation to one another in the plate plane.

3. A sound-absorber element according to claim 1 or 2, **characterised in that** another adjacent plate (8) is entirely without slits.

4. A sound-absorber element according to any one of claims 1 to 3, **characterised in that** the absorber plates (8), in particular of metal, are connected via the respective deadening layer (10) in a firmly bonded manner and/or via riveting (22) and/or connecting means of that kind.

5. A sound-absorber element according to any one of claims 1 to 4, **characterised in that** the/each deadening layer (10) is formed of a sheet, self-adhesive on both sides, of a viscoelastic material.

6. A sound-absorber element according to any one of claims 1 to 4, **characterised in that** the/each deadening layer (10) is composed of at least one layer of a damping material, such as rubber, silicone, plastics material, metal foam and/or woven wire cloth.

7. A sound-absorber element according to any one of claims 1 to 6, **characterised in that** the absorber plates (8) are, in the region of the base (12), connected via dimensionally stable spacers (26) lying directly therebetween.

8. A structure-borne sound absorber for a rail-vehicle wheel (1), consisting of at least one sound-absorber element (2) according to any one of the preceding claims, the/each sound-absorber element (2) being securable to a tread (4) of the wheel (1) by means of its base (12), in particular in a uniform, radially-symmetrical circumferential distribution.

9. A rail-vehicle wheel (1) having a structure-borne sound absorber according to claim 8, at least one sound-absorber element (2), in particular at least two sound-absorber elements (2) of the same or differing design, being secured to a wheel tread (4).

10. A wheel according to claim 9 in a construction as a monobloc wheel or a wheel with tyre.

11. A wheel according to claim 9 in a construction as a rubber-sprung wheel.

## Revendications

1. Elément absorbeur de bruit (2) destiné à atténuer les bruits de structure dans une roue de véhicule sur rail (1), cet élément absorbeur étant composé d'un stratifié plat (6) composé d'au moins deux plaques absorbantes parallèles (8a, 8b) avec une couche d'atténuation (10) située entre celles-ci, élément dans lequel le stratifié (6) peut être fixé par une base périphérique (12) sur un cercle de roulement (4) de la roue (1) de telle sorte qu'il se trouve dans un plan de roue disposé transversalement à un essieu de roue (14), et dans lequel chacune d'au moins deux plaques absorbantes (8) adjacentes est divisée en sections (18) de type languette par au moins une fente (16) ouverte au bord, partant d'un bord de plaque et se terminant dans la surface de plaque, **caractérisé en ce que** chaque fente (16) est recouverte, au moins dans sa zone d'extrémité de fente se terminant dans la surface de plaque et notamment dans une dépouille (20), par une zone sans fente de la plaque absorbante (8) respectivement adjacente.

2. Elément absorbeur de bruit selon la revendication 1, **caractérisé en ce que** les fentes (16) des plaques absorbantes (8) sont situées, au moins par endroits, de façon mutuellement décalée dans le plan de plaque.

3. Elément absorbeur de bruit selon la revendication 1 ou 2, **caractérisé en ce qu'**une autre plaque adjacente (8) est complètement exempte de fentes.

4. Elément absorbeur de bruit selon l'une quelconque des revendications 1 à 3, **caractérisé en ce que** les plaques absorbantes (8) composées en particulier de métal sont reliées par la couche d'atténuation (10) respective par contact de matière et/ou par des rivures (22) et/ou par des moyens d'assemblage similaires.

5. Elément absorbeur de bruit selon l'une quelconque des revendications 1 à 4, **caractérisé en ce que** la/chaque couche d'atténuation (10) est formée par un film autocollant double face en matériau viscoélastique.

6. Elément absorbeur de bruit selon l'une quelconque des revendications 1 à 4, **caractérisé en ce que** la/chaque couche d'atténuation (10) se compose d'au moins une couche d'un matériau d'atténuation, comme le caoutchouc, le silicone, une matière plastique, une mousse métallique et/ou un tissu métallique.

7. Elément absorbeur de bruit selon l'une quelconque des revendications 1 à 6, **caractérisé en ce que** les plaques absorbantes (8) sont reliées au niveau de la base (12) par des écarteurs (26) indéformables situés directement entre celles-ci.

8. Absorbeur de bruits de structure pour une roue de véhicule sur rail (1), composé d'au moins un élément absorbeur de bruit (2) selon l'une quelconque des revendications précédentes, dans lequel le/chaque élément absorbeur de bruit (2) peut être fixé par sa base (12), en particulier dans une répartition périphérique régulière, à symétrie radiale, sur un cercle de roulement (4) de la roue (1).

9. Roue de véhicule sur rail (1) compenant un absorbeur de bruits de structure selon la revendication 8, dans laquelle sur un cercle de roulement (4) au moins un élément absorbeur de bruit (2), en particulier deux éléments absorbeurs de bruit (2) de configuration identique ou différente, est/sont fixé(s).

10. Roue selon la revendication 9 dans une réalisation de roue massive ou de roue bandagée.

11. Roue selon la revendication 9 dans une réalisation de roue élastique.
